# EUROPEAN PATENT APPLICATION

(11) **EP 3 428 865 A1**
(43) Date of publication of application: **16.01.2019**
(21) Application number: 18183231.2
(22) Date of filing: 12.07.2018
(51) Int. Cl.: G06Q 20/22, G06Q 20/32, G06Q 20/38, G06Q 20/00

(54) **AUTHENTICATION METHOD AND RELATED METHOD FOR EXECUTING A PAYMENT**

(30) Priority: 13.07.2017 IT 201700079164
(71) Applicant: Gamma Group S.p.A., 20142 Milani, MI (IT)
(72) Inventor: COLOMBO, Danilo, 20871 Vimercate MB (IT)
(74) Representative: Barbaro, Gaetano

(57) **Abstract**

A method for authenticating a user by an authentication entity without using validation certificates and without transmitting sensitive data, such as a credit card number or ID and passwords of an online account, the authentication entity being entrusted of sending payment orders to a payment circuit, is disclosed. The method is characterized by a secure registration procedure during which the subscribing user shares his/her seed and counting with the authentication entity together with his/her own personal data, so as the authentication entity and the user can communicate in an encrypted form by encrypting messages with a same encryption key locally generated.

A method of executing a payment between two registered users is also disclosed.

All the disclosed methods are carried out by means of a software code executed by at least one mobile phone terminal.

## Description

### TECHNICAL FIELD

This disclosure relates to online transactions and more in particular to a method for authenticating a user by an authentication entity entrusted of sending payment orders to a payment circuit, a related method for executing a payment and computer programs for carrying out the methods.

### BACKGROUND

In the computer security field, authentication is defined as the process by which a computer, a software program or an user, verifies the correct, or at least presumed, identity of another computer, software program or user. Currently, there are lots of different authentication kinds, with various levels of security and usability. It ranges from the classical pair of "username/password", to the combination of those with personal "one-time" codes, to the codes sequencers most recently used by bank institutions, also called "security tokens", which replaced the "one-time" codes.

The requirement of authentication applies to all services that require the access to sensitive or confidential data, the secure communication of such data to third parties, and in general to all services that involve transfers of amounts of money or valuables or authorizations for such transfers in various capacities. In this context, the most common examples of human activities requiring authentication by an electronic system are: the purchase of goods on the Internet, the request for a certificate to a public institution, the use of a computer, the withdrawal of an amount of money from an ATM, the purchase of goods through a credit card or debit card at a normal retailer, and the carrying out of a banking transaction via the Internet (so-called "Home Banking").

There is the risk that authenticating information (i.e. the PINs) and encrypting information (i.e. the public keys) may be captured and misused by malicious users as they are transmitted over the air and stored inside the authentication system.

### SUMMARY

The present invention is aimed to provide a secure procedure for authenticating a user by an authentication entity without using validation certificates and without transmitting sensitive data, such as a credit card number or ID and passwords of an online account, the authentication entity being entrusted of sending payment orders to a payment circuit.

This outstanding result is attained with a method for authenticating a user as defined in the enclosed claim 1. The method is characterized by a secure registration procedure during which the subscribing user shares his/her seed and counting with the authentication entity together with his/her own personal data, so as the authentication entity and the user can communicate in an encrypted form by encrypting messages with a same encryption key locally generated.

A method of executing a payment between two registered users is also disclosed.

The methods illustrated in this specification may be carried out by means of a software code executed by a server or a mobile phone terminal.

Further embodiments are defined in the annexed claims as filed, that are integral part of the present description and are herein incorporated by reference.

### BRIEF DESCRIPTION OF THE DRAWINGS

Figure 1 illustrate interactions according to a method for carrying out a payment of the present disclosure.
Figure 2 is a flow chart of a registration procedure according to this disclosure.
Figure 3 is a flow chart of a payment procedure according to this disclosure carried out between registered User and Merchant.
Figure 4 is a flow chart of the operations carried out for executing encrypted transmission during the payment procedure of figure 3 according to an embodiment.
Figure 5 is a flow chart of the operations carried out for executing encrypted transmission during the payment procedure of figure 3 according to another embodiment.

### DETAILED DESCRIPTION

This disclosure provides procedures for registering and authenticating users to a strong authentication service, as well as a procedure for carrying out a payment between registered users.

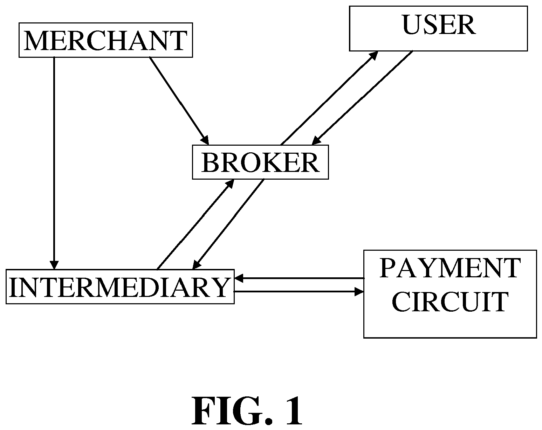

Figure 1 schematically depicts interactions established with a method according to this disclosure for carrying out payments between a Merchant and a User, both registered to the authentication service that is disclosed hereinafter. The entity that helps the Merchant and the User to access in a secure fashion to the Payment Circuit is split in two sections, namely the Intermediary entity and the Broker entity. The Intermediary is the entity to which Merchant and User have registered themselves once for all to the authentication service. The Broker is an entity, preferably separated from the Intermediary for security reasons, that uses a topic based protocol and allows at a same time communications according to a publish-subscribe pattern between numerous different pairs Merchant-User involved in respective payment operations. Messages from/to the various users are identified by different topics, because the Broker entity is configured to prevent that messages for different users and/or relating to different transactions be labeled with a same topic.

The steps carried out by the Broker entity will be explained in detail later on making reference to the payment procedure. The basic operations of registration of users to the service are carried out by the Intermediary entity, and will be presented first in this description.

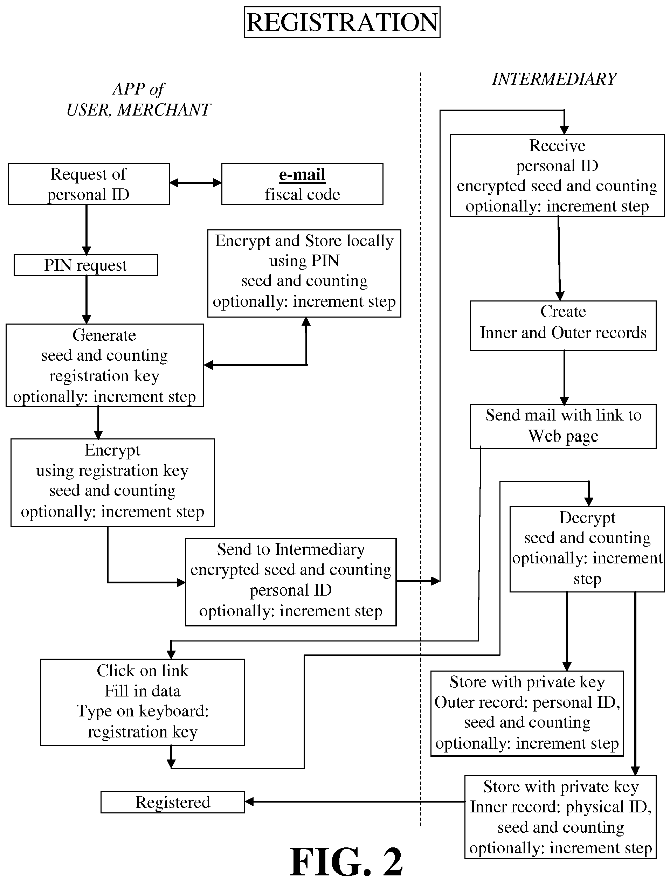

A registration procedure to the authentication service according to this disclosure is summarized in the flow chart of figure 2. Two different persons (User, Merchant) that want to be registered to the authentication service and to be authenticated thereby, have a software - for example an app installed on their mobile phones - for communicating with the Intermediary entity. In the ensuing explanation of the registration procedure, reference will be made to a generic user, that could be indifferently either the User or the Merchant. In the payment procedure, that will be described later, the User gives money and the Merchant receives money, though this aspect is irrelevant when registering to the authentication service.

An user that wants to register to the authentication service provides personal identification data ("personal ID"), among which there must be at least his/her e-mail address for allowing the Intermediary entity to send communications. Other optional personal IDs could be the user's fiscal code, other personal data, or even a picture of a QR code bought by the user for registering to the service. Then the user generates a PIN code, that should be inserted at each authentication request.

It is worth remarking that, according to this disclosure, there is no need of storing the PIN code in any device.

The app installed on the phone generates randomly a seed and a counting. A registration key is derived according to a pre-established random key generation algorithm shared by the app installed on the phone and the software of the Intermediary entity. The random key generation algorithm can be calculated with any known iteration map using as entries the seed and the counting.

The app encrypts the seed and the counting and stores them in an internal memory of the phone in encrypted form using the PIN code, for future referral. Then a one-time registration key is generated with the random key generation algorithm in function of the current values of seed and counting. The app encrypts the seed and the counting using the just generated registration key and sends to the Intermediary entity as a plain text the personal ID, comprising at least the e-mail address, and in encrypted form the seed and the counting.

According to an option, it is possible to generate also an increment step, which is an integer number greater than 1, in order to update the counting by incrementing it by the increment step. In this case, the increment step should be transmitted to the Intermediary entity in encrypted form as done for the seed and the counting.

As an alternative, the counting may be incremented by 1 by default (or even left unchanged, but this is less preferable) and thus there is no need to generate the increment step.

The Intermediary entity, which is unable at this stage to decrypt the seed and the counting, and optionally the increment step (if present), creates an inner record and an outer record destined to store relevant information of the user to be registered, and sends an Internet link of a web page of the Intermediary entity to the user's e-mail address. The user clicks on the received link and is asked to fill in personal data and to type the registration key generated by the app, which is at the same time automatically displayed by the app. The user types the one-time registration key and so communicates it to the Intermediary entity. Then the Intermediary entity decrypts the seed and the counting (and optionally also the increment step, if available), previously received in encrypted form, and encrypts them again using a private key (known only to the Intermediary entity). The personal IDs of the user together are stored in the outer record with the newly encrypted seed and the counting (and optionally also the increment step, if available), whilst the physical ID of the user is stored in the inner record with the newly encrypted seed and the counting (and optionally also the increment step, if available). Finally, the Intermediary entity acknowledges the registration to the user.

It is to be remarked that it is necessary to remember only one code, namely the PIN code. This PIN code is never transmitted nor stored, thus no one can discover it by intercepting communications sent/received by the app: only the user knows it. The registration key is transmitted and potentially it may be intercepted, but it is a one-time key generated by the app that cannot be used again. Therefore, grabbing it by intercepting communications is useless. Moreover, the Intermediary entity needs not to remember this key.

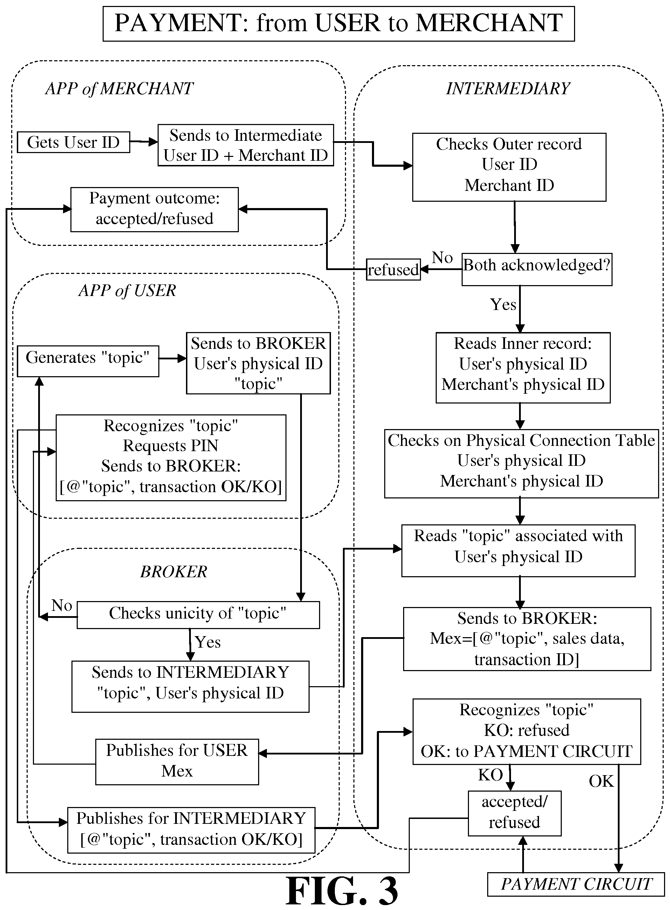

When two previously registered persons, namely a User who wants to buy and a Merchant who wants to sell to the User, want to carry out a sale, the related payment is managed according to the procedure schematically described in figure 3.

The app of the Merchant gets the personal ID (at least the e-mail address) of the User and sends to the Intermediary entity the User's personal ID and his own personal ID (Merchant ID). The Intermediary entity checks whether User and Merchant are registered, otherwise refuses to start the payment procedure and communicates to the Merchant that the payment has been refused. If the User and the Merchant are acknowledged, the Intermediary entity reads from the outer record the respective seed and counting associated with the respective personal IDs and reads also the respective physical ID from the inner record. Then the Intermediary entity checks periodically whether User and Merchant devices are still physically connected and remains waiting.

In the meanwhile, the app installed on the User's phone generates a one-time "topic", i.e. an alphanumeric label, for communicating with the Broker entity according to a publish-subscribe pattern. The Broker checks unicity of the topic generated for labeling the communications relating to the payment, in order to be sure that there are not communications labeled with a same topic but relating to a different payment, for example a payment between a different pair of users. If the topic sent by the User is verified as unique, the Broker entity sends the User's physical ID and the topic to the Intermediary entity. On its turn, the Intermediary entity recognizes the user's physical ID and reads the topic associated thereto: from this time onwards, all communications among the Intermediary entity, the Broker entity, the User and the Merchant will be labeled with the topic, as usual in a publish-subscribe pattern.

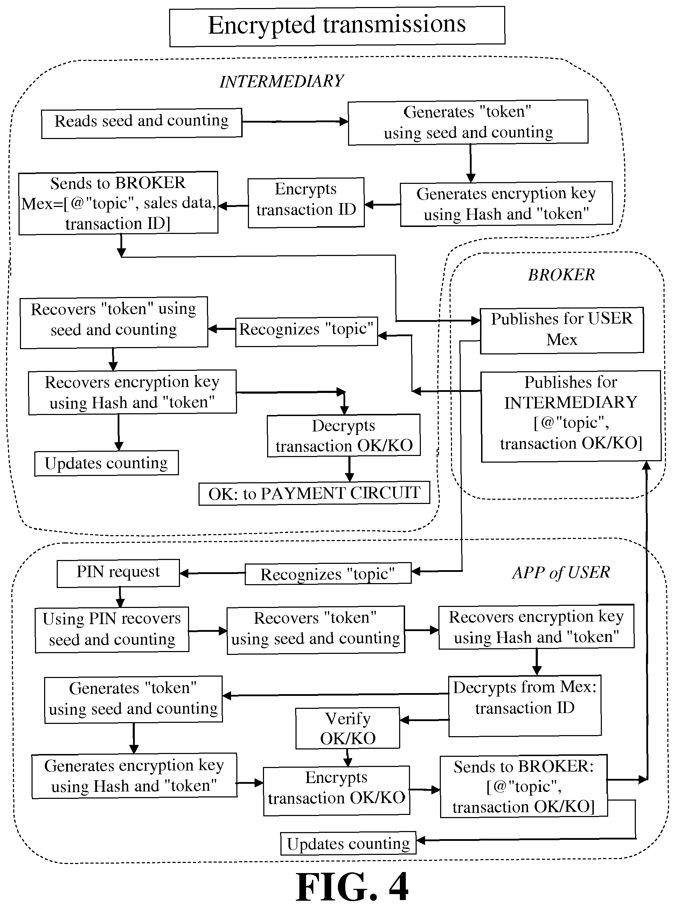

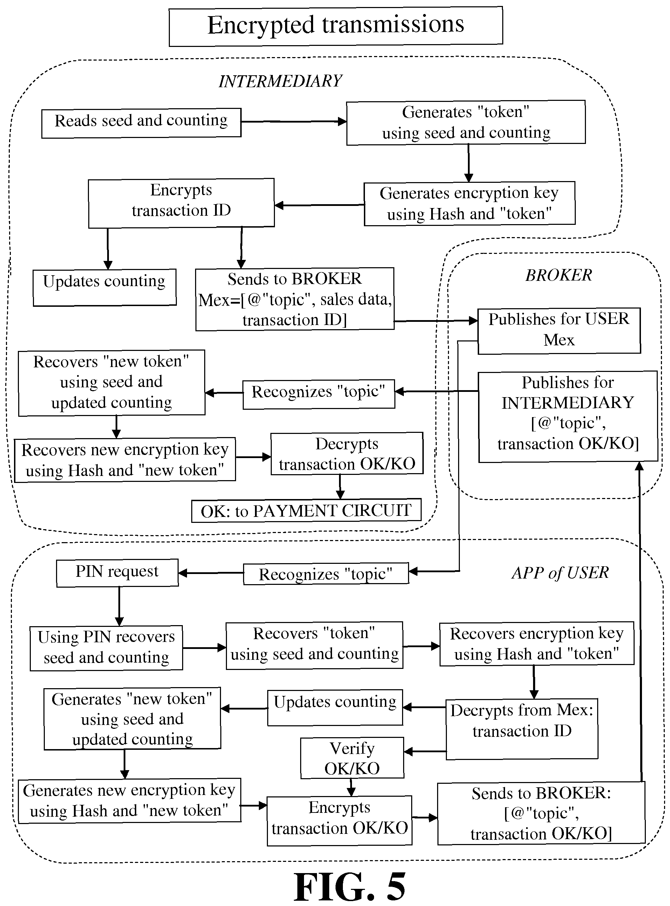

The Intermediary entity sends to the Broker entity a transaction message MEX containing as a plain text at least the topic and the sales data (such as the name of the item to buy, its price, the merchant's name), and in encrypted form the transaction ID (ID: Identification Data) of the message MEX. The Broker entity publishes the message MEX and remains waiting. The app of the User recognizes the topic of MEX and thus reads the whole message. Since the transaction ID is encrypted, the User's app request typing the PIN for decrypting and verifying the transaction ID. Exemplary operations for carrying out this operation are explained in a greater detail later on making reference to the flow chart of figure 4 or of figure 5.

If the transaction ID is verified, the User's app encrypts an authorization/denial string (transaction OK/KO) to the payment using an encryption key, that can be either the same encryption key or a newly generated encryption key, and sends the encrypted transaction OK/KO to the Broker entity together with the topic as a plain text. The Intermediary entity recognizes the topic and thus reads the encrypted authorization/denial string. By reconstructing the encryption key with a procedure that will be explained in detail later on making reference to figure 4 or to figure 5, the Intermediary entity decrypts the authorization/denial string (transaction OK/KO) and decides whether to send a payment request to the Payment Circuit before which the User has a bank account.

The Payment Circuit responds to the Intermediary entity, that communicates the payment outcome (accepted/refused) directly to the Merchant.

From the above procedure it is clear that the (human) Merchant and the (human) User do not see these operations, that are carried out in a silent fashion by their apps. As a matter of fact, the (human) Merchant experiences the same procedure as in a common sale carried out in an online transaction or in a Point Of Sale (POS). No password or card number or payment account is transmitted by the Merchant or User. The Intermediary entity manages the communications for the Payment Circuit, that interacts only with the Intermediary entity.

It is worth noticing that there is no exchange of validation certificates, nor passwords, nor tokens generated by certain electronic devices as the devices used for carrying out online banking operations. The mere fact that the User is capable of interacting with the Intermediary entity understanding the messages published thereby and of being understood thereby, is an authentication of User's identity.

The communications between the User and the Intermediary entity through the Broker entity are encrypted with an encryption key that is never transmitted, but is recalculated and optionally updated locally at each communication by the Intermediary entity by and the User's app one independently from the other. Therefore, the Intermediary entity is sure that User is the same entity that carried out the registration at the service, and vice versa, without exchanging validation information (certificates, passwords, etc.). These operations are carried out with the sequence of method steps sketched in the flow chart of figure 4.

When the Intermediary entity is aware of the physical ID of the User's device onto which the app is running, the Intermediary entity decrypts from the inner record the seed and counting of the User. By processing the seed and counting, the Intermediary entity generates an encryption key with the pre-established random key generation algorithm, for example by generating a "token" with an iteration map using seed and counting as entries, and by generating the encryption key by applying a hash function to the "token". The transaction data and the authentication data of the MEX are encrypted with the encryption key and the MEX is sent to the Broker entity.

The User's app recognizes the topic of the message published by the Broker entity and reads the encrypted part of the message MEX. In order to decrypt it, the User's app request typing the PIN code and decrypts (with it) the seed and the counting stored in an internal memory of the phone. Using the seed and counting and the pre-established random key generation algorithm, the User's app recalculates the same encryption key generated by the Intermediary entity and decrypts the transaction ID (Identification Data).

Therefore, it is not necessary to transmit the encryption key used by the Intermediary entity because the User's app is capable of recalculating it, neither is necessary to store the encryption key in the phone or in the Intermediary entity.

Depending on whether the transaction data and authentication data of MEX are verified or not, an appropriate verification message (verify OK/KO) is encrypted using the encryption key and is sent in encrypted form to the Broker entity together with the topic (as a plain text) chosen for the instant payment. The Intermediary entity recognizes the topic, gets the encrypted verification message and generates the encryption key used by the User's app by combining the seed and the updated counting with the pre-established key generation algorithm. Therefore, the encrypted verification message can be decrypted by the Intermediary entity, that upon it decides whether to send the payment request to the Payment Circuit or not.

In the embodiment shown in figure 4, both the User and the Intermediary entity update the counting at the end of the communications between them, so as to generate a new encryption key in case of a new transaction.

According to an alternative embodiment, illustrated in the self-explaining flow-chart of figure 5, the counting is incremented at each exchange of messages from the Intermediary entity to the User or vice versa, so as to use a new encryption key at each message. In order to keep aligned seed and counting stored by the Intermediary entity and seed and counting stored by the User, the User's app updates the counting stored in the phone. At the same time, the Intermediary entity updates the counting and stores the updated counting (after having encrypted it with the private key) in the outer record and in the inner record. Then, the app generates a new encryption key using the seed and the updated counting with the pre-established random key generation algorithm.

This latter solution is relatively more onerous than the former solution, but offers a higher degree of security of communications.

The counting may be updated sequentially by default, i.e. incremented by 1. As an alternative, if a different integer increment step has been established during the registration phase of the User, then the counting is updated by incrementing it by the increment step.

There may be cases in which the connection is temporarily lost and the payment procedure is to be resumed from the point at which it was interrupted. This event may be critical in the flow chart of figure 5, because the counting of the Intermediary entity and of the User may become different as a consequence of a connection loss. According to an embodiment of this disclosure, not illustrated in the annexed flow-charts, if either the Intermediary entity or the User cannot decrypt a message coming from the other party, then counting is incremented/decremented by one increment step (or even two or three increment steps) for trying to reconstruct by trial the correct encryption key used for encrypting the message. If the correct encryption key is recovered, the corresponding correct counting is stored, otherwise the payment procedure is aborted and it is necessary to register again for sharing the same counting between the Intermediary entity and the User.

A publish-subscribe communication protocol suitable for connecting the User and the Intermediary entity may be the so-called MQTT or similar protocols, for example.

The method steps illustrated in the enclosed flow-charts may be implemented with a software code run by a server or a mobile phone. Merely as an example, the Intermediary entity may run a software written in Java and the Broker entity may run a software written in C, or vice versa.

The software running on the mobile phone terminal may be written with any software development environment for mobile phones, such as the presently available development tools for writing apps for Android.

## Claims

1. A method for authenticating a user (User, Merchant) by a first entity (Intermediary), wherein said user (User, Merchant) is associated to an electronic equipment in the form of a mobile phone terminal on which a software program is loaded, wherein said first entity (Intermediary) is associated to an electronic equipment, the method being **characterized by** a registration procedure comprising the following steps:
generating an encryption key using a seed and a counting with said software program,
encrypting said seed and said counting with said encryption key using an encryption algorithm known to said first entity (Intermediary), and sending to said first entity (Intermediary) personal identification data of said user comprising at least an e-mail address of the user (User, Merchant) as a plain text, and the seed and the counting encrypted with said encryption key,
sending, from said first entity (Intermediary) to the e-mail address of the user (User, Merchant), a link to a webpage of the first entity (Intermediary) for inputting personal identification data of the user (User, Merchant) and said encryption key,
connecting the user (User, Merchant) to said link and transmitting said encryption key by typing it in a dialog window of said webpage,
decrypting with said encryption key, at said first entity (Intermediary), the seed and the counting previously sent in encrypted form by the user (User, Merchant),
storing at said first entity (Intermediary) with a private key of the first entity (Intermediary) said personal identification data, said seed, said counting and physical identification data of the mobile phone belonging to the user,
communicating from said first entity (Intermediary) to the user (User, Merchant) that a registration is completed;
said user (User, Merchant) being authenticated by said first entity (Intermediary) by communicating with said first entity (Intermediary) in encrypted form using an encryption key generated with said seed and said counting by means of a key generation algorithm known to said first entity (Intermediary).

2. The method of claim 1, further comprising the step of encrypting with said PIN code said seed and said counting and storing said seed and said counting in encrypted form in said mobile phone terminal.

3. The method of claim 1, comprising the steps of
sending encrypted with said encryption key to said first entity (Intermediary) also an increment step together with said seed and said counting;
encrypting with said PIN code said increment step, said seed and said counting and storing said increment step, said seed and said counting in encrypted form in said mobile phone terminal.

4. The method of claim 2 or 3, further comprising executing at said user (User, Merchant) the steps of:
retrieving, with said PIN code, said seed and said counting stored in the mobile phone terminal;
generating said encryption key using said seed and said counting retrieved from the mobile phone terminal.

5. A method of executing a payment from a first user (User) to a second user (Merchant), both registered by said first entity (Intermediary) according to the method of one of claims from 1 to 4, wherein said first user (User) is associated to an electronic equipment in the form of a mobile phone terminal on which a software program is loaded, wherein said first entity (Intermediary) is associated to an electronic equipment, the method being **characterized by** a payment procedure executed through a second entity (Broker) associated with a respective electronic equipment, comprising the following steps:
at said second user (Merchant):
- sending from said second user (Merchant) to said first entity (Intermediary) personal identification data of said first user (User) and of said second user (Merchant);
at said first user (User):
- generating an alphanumeric string as a topic identifier of communications according to a publish-subscribe pattern, and sending said topic identifier with physical identification data of said first user (User) to said second entity (Broker),
- sending to/reading from said second entity (Broker) messages to/from said first entity (Intermediary) labeled with said topic identifier;
at said second entity (Broker):
- publishing messages to/from said first user (User) or said first entity (Intermediary) according to a publish-subscribe communication pattern,
- checking unicity of said topic identifier and asking said first user (User) to generate a new topic identifier in case a message with the same topic identifier is already present;
at said first entity (Intermediary):
- checking at said first entity (Intermediary) whether said first user (User) and said second user (Merchant) are both registered, either starting a payment procedure or aborting a payment procedure and communicating to said second user (Merchant) that a payment has been refused depending upon an outcome of said checking operation,
- reading in the inner record physical identification data of said first user (User) and of said second user (Merchant) and checking at least periodically whether a respective mobile phone of said first user (User) and of said second user (Merchant) are connected,
- sending to/reading from said second entity (Broker) messages to/from said first user (User) labeled with said topic identifier,
- forwarding to/receiving from a payment circuit, communications about payment orders to said second user (Merchant) published by said second entity (Broker) with said topic identifier.

6. The method of claim 5, wherein said first user (User) and said first entity (Intermediary) for reading/sending a message from/to said second entity (Broker):
- acquire messages published by the second entity (Broker) labeled with said topic identifier;
- use seed and counting of said first user (User) for generating said encryption key for decrypting said acquired messages;
- update said counting and generating a new encryption key using said seed and an updated counting;
- generate encrypted responses to said acquired messages using said new encryption key;
- send to said second entity (Broker) messages containing said encrypted responses labeled with said topic identifier;
- store an updated counting encrypted with said PIN.

7. The method of claim 5, wherein said first user (User) and said first entity (Intermediary) for reading/sending a message from/to said second entity (Broker):
- acquire messages published by the second entity (Broker) labeled with said topic identifier;
- use seed and counting of said first user (User) for generating said encryption key for decrypting said acquired messages;
- generate encrypted responses to said acquired messages using said encryption key;
- send to said second entity (Broker) messages containing said encrypted responses labeled with said topic identifier;
- update said counting and storing an updated counting encrypted with said PIN.

8. The method of one of claims 6 or 7 when depending on claim 3, wherein said counting is updated by incrementing it by said increment step.

9. The method of one of claims from 5 to 8, wherein said first user (User), said first entity (Intermediary) and said second entity (Broker) communicate through a publish and subscribe communication protocol, wherein topic identifiers are univocally generated at each connection of said first user (User) and for each single operation to be performed.

10. A computer program executable by a mobile phone terminal, comprising a software code for causing a mobile phone to carry out the operations of one of claims from 1 to 9 when the software code is executed by the mobile phone.
